# EUROPÄISCHE PATENTSCHRIFT

(11) **EP 1 920 963 B1**
(45) Veröffentlichungstag und Bekanntmachung des Hinweises auf die Patenterteilung: **09.06.2010**
(21) Anmeldenummer: 07116654.0
(22) Anmeldetag: 18.09.2007
(51) Int. Cl.: B60J 10/04, B60J 10/08, B60J 10/00, B60J 10/06

(54) **Dichtungsanordnung zum Abdichten von beweglichen KFZ-Fensterscheiben**
Sealing arrangement for sliding window panes of a motor vehicle
Joint d'étanchéité pour vitres coulissantes d'un véhicule automobile

(30) Priorität: 10.11.2006 DE 102006053094
(43) Veröffentlichungstag der Anmeldung: 14.05.2008
(73) Patentinhaber: Metzeler Automotive Profile Systems GmbH, 88131 Lindau/Bodensee (DE)
(72) Erfinder: Krause, Fritz c/o Metzeler Automotive Profile Systems GmbH, 88145, Hergatz (DE)
(74) Vertreter: Schober, Christoph D.

(56) Entgegenhaltungen:
- EP-A- 1 388 449
- WO-A-2006/064370
- DE-A1- 4 339 033
- DE-A1- 10 122 637
- DE-A1- 10 247 015
- DE-A1- 19 922 749
- US-A- 5 561 003

## Beschreibung

Die Erfindung betrifft eine Dichtung zum Abdichten von Fensterscheiben eines Kraftfahrzeugs, die ein Dichtungsprofil, das aus einem elastisch verformbaren Werkstoff besteht und sich in einer Längsrichtung erstreckt, und eine Zierleiste, die mit dem Dichtungsprofil verbunden ist, aufweist. Das Dichtungsprofil ist mit zumindest einem Dichtungsabschnitt und einem Befestigungsabschnitt versehen. Der Befestigungsabschnitt ist im Querschnitt annähernd U-förmig ausgestaltet und auf einen Flansch einer Karosserie des Kraftfahrzeugs aufsteckbar. Die Erfindung bezieht sich ferner auf eine Dichtungsanordnung, die ein solches Dichtungsprofil und einen Flansch umfasst.

Eine Dichtungsanordnung, die zum einen zum Abdichten einer Tür gegenüber der Karosserie eines Kraftfahrzeugs und zum anderen zum Abdichten einer in der Tür angeordneten Fensterscheibe dient, wird in der DE 43 39 033 C2 beschrieben. Die Dichtungsanordnung umfasst ein Dichtungsprofil und eine aus Aluminium oder Kunststoff bestehende Zierleiste. Die Zierleiste weist einen Basisabschnitt und zwei senkrecht von diesem abragende Befestigungsstege auf, die parallel zu einem Flansch verlaufen und in zwei nach außen hin offene Schlitze eines im Wesentlichen U-förmigen Befestigungsbereichs des Dichtungsprofils formschlüssig gehalten sind. Zu diesem Zweck sind die freien Enden der Befestigungsstege verdickt ausgestaltet und rasten in zugeordnete Ausnehmungen der Schlitze ein. Die den Flansch umgreifenden Befestigungsstege rufen eine Versteifung des Dichtungsprofils hervor, um auf diese Weise den Befestigungsbereich ohne einen das Dichtungsprofil armierenden Verstärkungsträger an dem Flansch befestigen zu können.

Eine Dichtungsanordnung für ein Kraftfahrzeugfenster, die mit einer sich in Längsrichtung erstreckenden Dichtung versehen ist, wird in der DE 101 22 637 A1 beschrieben. Die Dichtung weist einen Fensteraufnahmekanal zur Aufnahme einer beweglichen Fensterscheibe und einen annähernd U-förmigen Aufnahmekanal zur Aufnahme eines Stegs auf. Der Steg ist aus Metall gefertigt und mittels Walzen oder Prägen derart profiliert, dass er mehrere Eingriffselemente in Längsrichtung aufweist. Die Eingriffselemente sind durch Querstege voneinander getrennt. Zur formschlüssigen Aufnahme des Stegs in dem Aufnahmekanal der Dichtung weist diese Halteelemente auf, die in die Eingriffselemente eingreifen. Zudem umfasst die Dichtung einen metallenen Verstärkungsträger, der für einen kraftschlüssigen Eingriff der Halteelemente in dem Steg sorgt.

Ein Dichtungsprofil, das mit einer Zierleiste versehen ist, wird in der DE 102 47 015 A1 beschrieben. Das Dichtungsprofil dient zum Abdichten einer beweglichen Fensterscheibe an einer Kraftfahrzeugtür. Zu diesem Zweck weist das Dichtungsprofil einen Grundkörper aus einem elastischen Material auf, an dem ein Dichtungsbereich und ein Befestigungsbereich zur Festlegung des Dichtungsprofils an einem Türflansch vorgesehen sind. Die Zierleiste ist formschlüssig an dem Grundkörper befestigt und in ihrer Längsrichtung gebogen. Das Befestigungselement ist als längliches Einsteckschwert ausgebildet, das im Wesentlichen senkrecht zu einem Blendenbereich ausgerichtet ist. Zudem ist an dem Befestigungselement mindestens ein Ansatz vorgesehen, der formschlüssig in eine zugeordnete Aufnahme an dem Grundkörper eingreift.

Eine Dichtung, die mit einem an ein U-förmigen Befestigungsabschnitt und einem annähernd L-förmigen Halteabschnitt versehen ist, wird in der US 5,561,003 A beschrieben. Zur Befestigung der Dichtung wird in dem U-förmigen Aufnahmekanal eine innere Blende und eine äußere Blende einer Fahrzeugtür aufgenommen. In den U-förmigen Aufnahmekanal ragen Dichtlippen hinein, die an der äußeren Blende anliegen. Zudem ist der Halteabschnitt an seinem Fuß mit Rippen versehen, die in Öffnungen der inneren Blende eingreifen.

Weiterhin offenbart WO 2006/064370 A2 eine Dicht-, Trimm- und Abschlussleiste einer Fahrzeugtür, die einen U-förmig ausgebildeten Aufnahmekanal, einen zweiten Aufnahmekanal sowie zwei mit einer Beflockung versehene Dichtlippen umfasst. In den zweiten Aufnahmekanal wird eine Zierleiste mittels eines daran ausgebildeten Flanschs eingesetzt. Zur Befestigung der Leiste an einem von der Fahrzeugkarosserie ausgebildeten Flansch ragen in den U-förmigen Aufnahmekanal mehrere Haltelippen hinein. Die Leiste wird mit dem Aufnahmekanal auf den Flansch aufgesteckt, so dass die Haltelippen an dem Flansch anliegen und für einen Kraftschluss sorgen. Die Leiste kann über einen Verstärkungsträger verfügen, um einen wirksamen Kraftschluss sicherzustellen.

Der Erfindung liegt die **Aufgabe** zugrunde, eine Dichtung zu schaffen, die leichtgewichtig ist und sich zuverlässig an einem Flansch befestigen lässt. Außerdem soll eine Dichtungsanordnung angegeben werden, die neben der Dichtung einen Flansch umfasst.

Diese Aufgabe wird durch eine Dichtung gemäß Anspruch 1 und eine Dichtungsanordnung gemäß Anspruch 12 **gelöst.** Bevorzugte Ausgestaltungen der Dichtung und der Dichtungsanordnung werden in den Ansprüchen 2 bis 11 und 13 bis 19 definiert.

Die erfindungsgemäße Dichtung zeichnet sich durch eine Vielzahl an in der Längsrichtung voneinander beabstandete Rastabschnitte aus, die von einem ersten Schenkel und/oder einem zweiten Schenkel des Befestigungsabschnitts des Dichtungsprofils durch Einschnitte abgetrennt und in zugeordnete Aussparungen des Flansches eindrückbar sind. Zu diesem Zweck ist der erste Befestigungssteg und/oder der zweite Befestigungssteg mit wenigstens einem Ansatz versehen, durch den die Rastabschnitte in der Aussparung des Flansches eindrückbar sind. Die in die Aussparungen des Flansches einrastenden Rastabschnitte bewirken einen Formschluss zwischen dem Befestigungsabschnitt und dem Flansch, der eine zuverlässige Befestigung des Dichtungsprofils an dem Flansch sicherstellt.

Die erfindungsgemäße Dichtung macht einen Verstärkungsträger für die Armierung des Befestigungsabschnitts entbehrlich. Denn der in dem Zwischenraum zwischen den Befestigungsstegen der Zierleiste aufgenommene Befestigungsabschnitt erfährt durch die sich parallel zu dem Flansch erstreckenden Befestigungsstege eine räumliche Begrenzung, die zu einem festen und dauerhaften Sitz des Befestigungsabschnitts auf dem Flansch beiträgt. Aufgrund der Entbehrlichkeit des in der Regel aus Metall bestehenden Verstärkungsträgers ist die Dichtung vergleichsweise leichtgewichtig und lässt sich einfach recyceln. Das Fehlen eines Verstärkungsträgers trägt zudem zu einer geringen Bauhöhe bei.

Bevorzugt sind die Rastabschnitte in Längsrichtung äquidistant angeordnet. Der zwischen den Rastabschnitten in Längsrichtung vorhandene Abstand ist zweckmäßigerweise so dimensioniert, dass das Dichtungsprofil über eine ausreichende Stabilität verfügt.

Bevorzugt ist der Befestigungsabschnitt, vorzugsweise der erste Schenkel und/oder der zweite Schenkel, frei von einem Verstärkungsträger.

Vorzugsweise ist der Ansatz durch eine Verdickung der Befestigungsstege oder durch einen aus den Befestigungsstegen ausgestanzten Vorsprung gebildet.

Bevorzugt ist eine Vielzahl an in der Längsrichtung voneinander beabstandeten Ansätzen vorgesehen, wobei jedem Rastabschnitt ein Ansatz zugeordnet ist.

Bevorzugt ist ein erster Dichtungsabschnitt zum Abdichten einer Tür gegenüber der Karosserie des Kraftfahrzeugs und ein zweiter Dichtungsabschnitt zum Abdichten einer in der Tür angeordneten Fensterscheibe vorgesehen.

Bevorzugt ist der zweite Dichtungsabschnitt mit der Zierleiste verbunden.

Bevorzugt ist der zweite Dichtungsabschnitt mit wenigstens einer Aussparung versehen, und die Zierleiste weist wenigstens einen Vorsprung auf, der formschlüssig in die Aussparung eingreift.

Bevorzugt sind das Dichtungsprofil und die Zierleiste in der Längsrichtung gekrümmt.

Bevorzugt ist das Dichtungsprofil aus einem thermoplastischen Elastomer oder Ethylen-Propylen-Dien-Kautschuk gefertigt, vorzugsweise extrudiert.

Bevorzugt ist die Zierleiste aus Kunststoff oder Metall, vorzugsweise Aluminium, gefertigt.

In einer bevorzugten Ausgestaltung der erfindungsgemäßen Dichtungsanordnung sind die Rastabschnitte entweder an der ersten Befestigungsfläche oder an der zweiten Befestigungsfläche in die Aussparungen eingedrückt. Alternativ können die Rastabschnitte sowohl an der ersten Befestigungsfläche als auch an der zweiten Befestigungsfläche in die Aussparungen eingedrückt sein, wobei in diesem Fall zweckmäßigerweise die Aussparungen an der ersten Befestigungsfläche in der Längsrichtung versetzt zu den Aussparungen an der zweiten Befestigungsfläche angeordnet sind, um eine ausreichende Steifigkeit des Flansches zu erhalten.

Bevorzugt besteht der Flansch aus Metall, vorzugsweise Aluminium.

Bevorzugt hat der Flansch eine Dicke von wenigstens 1,5 mm, vorzugsweise wenigstens 3 mm.

Bevorzugt haben die Aussparungen eine Tiefe von wenigstens 0,7 mm, vorzugsweise wenigstens 1,5 mm.

Bevorzugt setzt sich der Flansch aus einem ersten Rahmenteil und einem zweiten Rahmenteil zusammen, die durch Laserschweißen miteinander verbunden sind.

Einzelheiten und weitere Vorteile der Erfindung ergeben sich aus der nachfolgenden Beschreibung zweier Ausführungsbeispiele. In den die Ausführungsbeispiele lediglich schematisch darstellenden Zeichnungen veranschaulichen im Einzelnen.
- Fig. 1: eine Seitenansicht eines Kraftfahrzeugs;
- Fig. 2: einen Schnitt entlang der Linie II-II in Fig. 1, der eine erste Ausführungsform der Erfindung zeigt;
- Fig. 3: eine perspektivische Ansicht eines Befestigungsstegs einer Zierleiste und eines mit Aussparungen versehenen Flansches und
- Fig. 4: einen Schnitt gemäß Fig. 2, der eine zweite Ausführungsform der Erfindung zeigt.

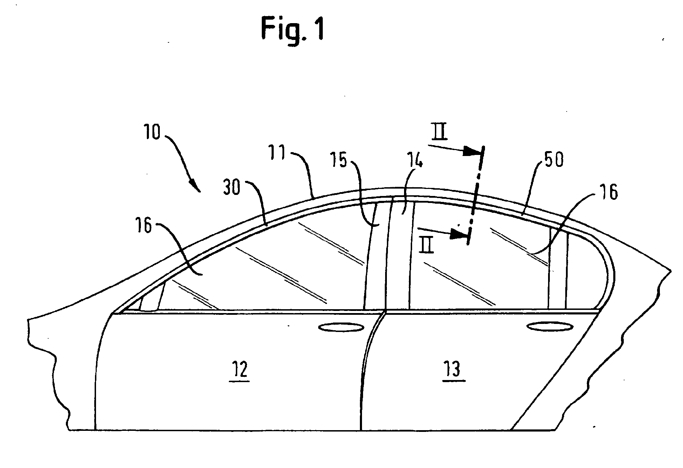

Das in Fig. 1 dargestellte Kraftfahrzeug 10 weist eine Karosserie 11 auf, an der eine Vordertür 12 und eine Hintertür 13 angeordnet sind. In den Türen 12, 13 ist jeweils eine verschiebbare Fensterscheibe 16 angeordnet. Die Fensterscheibe 16 wird in Führungen geführt, die im Bereich der B-Säule des Kraftfahrzeugs 10 hinter Blenden 14, 15 angeordnet sind. Im Bereich des Daches des Kraftfahrzeugs 10 werden die Fensterscheiben 16 durch eine Dichtung abgedichtet, die neben einem elastomeren Dichtungsprofil 30 eine Zierleiste 50 umfasst.

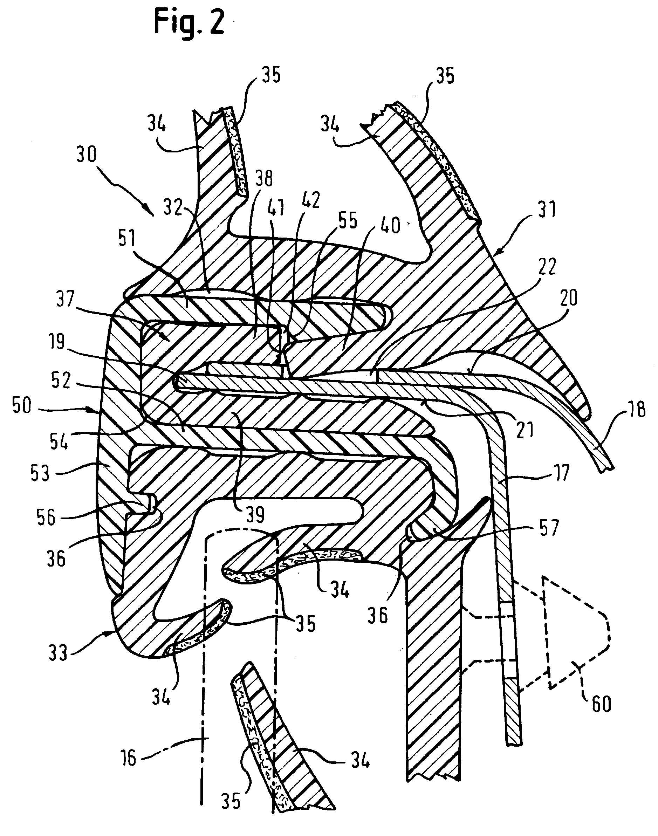

Wie insbesondere Fig. 2 zu erkennen gibt, setzt sich das Dichtungsprofil 30 aus einem ersten Dichtungsabschnitt 31, der zum Abdichten der Türen 12, 13 gegenüber dem Dach des Kraftfahrzeugs 10 dient, und einem zweiten Dichtungsabschnitt 31, 33 der zum Abdichten und Aufnehmen des oberen Rands der Fensterscheiben 16 dient, zusammen. Die Dichtungsabschnitte 31, 33 sind jeweils mit Dichtlippen 34 versehen, die eine reibungsvermindernde Beflockung 35 aufweisen.

Die Zierleiste 50 weist einen ersten Befestigungssteg 51 und einen zweiten Befestigungssteg 52 auf, die durch einen Zwischenraum 54 voneinander beabstandet und durch einen Basisabschnitt 53 miteinander verbunden sind. Der erste Befestigungssteg 51 greift in einen Aufnahmekanal 32 des ersten Dichtungsabschnitts 31 ein. Zwischen den Befestigungsstegen 51, 52 befindet sich ein im Querschnitt U-förmiger Befestigungsabschnitt 37 des Dichtungsprofils 30. Der Befestigungsabschnitt 37 ist auf einen Flansch 19 der Karosserie 11 des Kraftfahrzeugs 10 gesteckt. Der Flansch 19 setzt sich aus einem ersten Rahmenteil 17 und einem zweiten Rahmenteil 18 zusammen, die durch Laserschweißen miteinander verbunden sind. Der Flansch 19 weist eine erste, dem Befestigungssteg 51 zugewandte Befestigungsfläche 20 und eine zweite, dem Befestigungssteg 52 zugewandte Befestigungsfläche 21 auf.

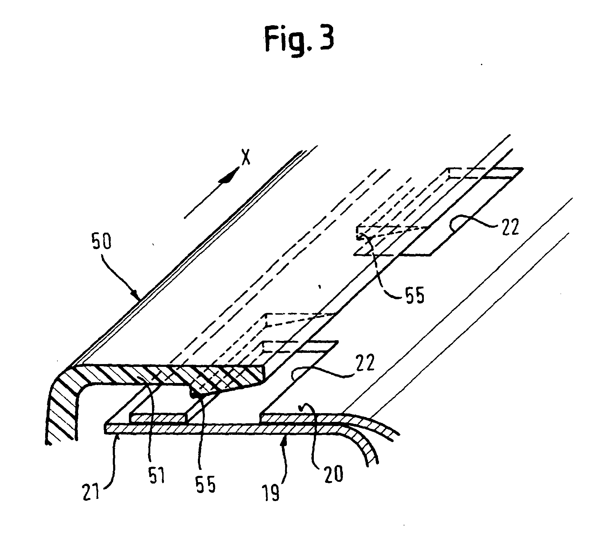

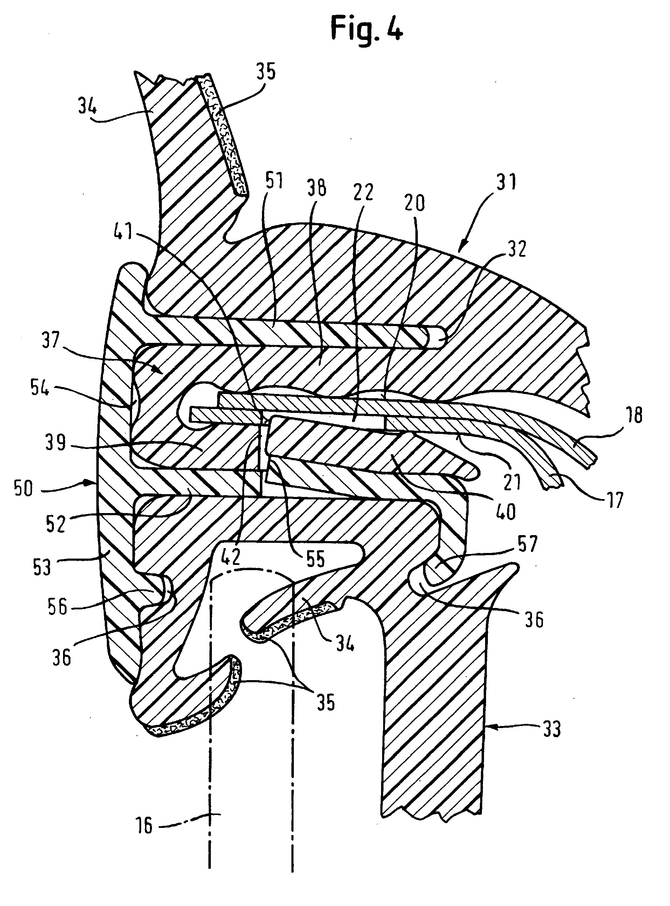

Bei der in Fig. 2 gezeigten Ausführungsform der Erfindung ist die erste Befestigungsfläche 20 mit in der Längsrichtung x äquidistanten Aussparungen 22 versehen, wie auch Fig. 3 zu erkennen gibt. Bei der in Fig. 4 gezeigten Ausführungsform der Erfindung sind die Aussparungen 22 nicht an der ersten Befestigungsfläche 20, sondern an der zweiten Befestigungsfläche 21 vorgesehen.

Der zweite Dichtungsabschnitt 33 ist formschlüssig mit der Zierleiste 50 verbunden. Zu diesem Zweck ist die Zierleiste 50 mit zwei Vorsprüngen 56, 57 versehen, die in zugeordnete Aussparungen 36 des Dichtungsabschnitts 33 eingreifen. Wie insbesondere Fig. 2 zu erkennen gibt, kann der zweite Befestigungsabschnitt 33 zudem mittels einem Befestigungsclip 60 an dem ersten Rahmenteil 17 befestigt sein.

### Bezugszeichen liste

- 10: Kraftfahrzeug
- 11: Karosserie
- 12: Vordertür
- 13: Hintertür
- 14: Blende
- 15: Blende
- 16: Fensterscheibe
- 17: erstes Rahmenteil
- 18: zweites Rahmenteil
- 19: Flansch
- 20: erste Befestigungsfläche
- 21: zweite Befestigungsfläche
- 22: Aussparung

- 30: Dichtungsprofil
- 31: erster Dichtungsabschnitt
- 32: Aufnahmekanal
- 33: zweiter Dichtungsabschnitt
- 34: Dichtlippe
- 35: Beflockung
- 36: Aussparung
- 37: Befestigungsabschnitt
- 38: erster Schenkel
- 39: zweiter Schenkel
- 40: Rastabschnitt
- 41: freies Ende
- 42: Einschnitt

- 50: Zierleiste
- 51: erster Befestigungssteg
- 52: zweiter Befestigungssteg
- 53: Basisabschnitt
- 54: Zwischenraum
- 55: Ansatz
- 56: Vorsprung
- 57: Vorsprung

- 60: Befestigungsclip

- x: Längsrichtung

## Patentansprüche

1. Dichtung zum Abdichten von Fensterscheiben (16) eines Kraftfahrzeugs (10) mit
einem Dichtungsprofil (30), das aus einem elastisch verformbaren Werkstoff besteht und sich in einer Längsrichtung (x) erstreckt;
wobei das Dichtungsprofil (30) zumindest einen Dichtungsabschnitt (31, 33) und einen Befestigungsabschnitt (37) aufweist;
wobei der Befestigungsabschnitt (37) im Querschnitt annähernd U-förmig ausgestaltet ist und auf einen Flansch (19) einer Karosserie (11) des Kraftfahrzeugs (10) aufsteckbar ist;
wobei der Befestigungsabschnitt (37) einen ersten Schenkel (38), der an einer ersten Befestigungsfläche (20) des Flansches (19) anlegbar ist, und einen zweiten Schenkel (39), der an einer zweiten Befestigungsfläche (21) des Flansches (19) anlegbar ist, aufweist, und
einer Zierleiste (50), die mit dem Befestigungsabschnitt (37) verbunden ist;
wobei die Zierleiste (50) einen ersten Befestigungssteg (51), einen zweiten Befestigungssteg (52), der durch einen Zwischenraum (54) von dem ersten Befestigungssteg (51) beabstandet ist, und einen Basisabschnitt (53), der den ersten Befestigungssteg (51) und den zweiten Befestigungssteg (52) miteinander verbindet, umfasst;
wobei der Befestigungsabschnitt (37) in dem Zwischenraum (54) angeordnet ist;
wobei von dem ersten Schenkel (38) und/oder dem zweiten Schenkel (39) eine Vielzahl an in der Längsrichtung (x) voneinander beabstandeten Rastabschnitte (40) abgetrennt sind, die in zugeordnete Aussparungen (22) des Flansches (19) eindrückbar sind, und
wobei der erste Befestigungssteg (51) und/oder der zweite Befestigungssteg (52) mit wenigstens einem Ansatz (55) versehen ist, durch den die Rastabschnitte (40) in die Aussparung (22) des Flansches (19) eingedrückt werden.

2. Dichtung nach Anspruch 1, **gekennzeichnet durch** in der Längsrichtung (x) äquidistant angeordnete Rastabschnitte (40).

3. Dichtung nach Anspruch 1 oder 2, **dadurch gekennzeichnet, dass** der Befestigungsabschnitt (37), vorzugsweise der erste Schenkel (38) und/oder der zweite Schenkel (39), frei von einem Verstärkungsträger ist.

4. Dichtung nach einem der Ansprüche 1 bis 3, **dadurch gekennzeichnet, dass** der Ansatz (55) durch eine Verdickung der Befestigungsstege (51, 52) oder durch einen aus den Befestigungsstegen (51, 52) ausgestanzten Vorsprung gebildet ist.

5. Dichtung nach Anspruch 4, **gekennzeichnet durch** eine Vielzahl an in der Längsrichtung (x) voneinander beabstandeten Ansätzen (55), wobei jedem Rastabschnitt (40) ein Ansatz (55) zugeordnet ist.

6. Dichtung nach einem der Ansprüche 1 bis 5, **gekennzeichnet durch** einen ersten Dichtungsabschnitt (31) zum Abdichten einer Tür (12, 13) gegenüber der Karosserie (11) des Kraftfahrzeugs (10) und einen zweiten Dichtungsabschnitt (33) zum Abdichten einer in der Tür (12, 13) angeordneten Fensterscheibe (16).

7. Dichtung nach Anspruch 6, **dadurch gekennzeichnet, dass** der zweite Dichtungsabschnitt (33) mit der Zierleiste (30) verbunden ist.

8. Dichtung nach Anspruch 7, **dadurch gekennzeichnet, dass** der zweite Dichtungsabschnitt (33) mit wenigstens einer Aussparung (36) versehen ist und die Zierleiste (50) wenigstens einen Vorsprung (56, 57) aufweist, der formschlüssig in die Aussparung (36) eingreift.

9. Dichtung nach einem der Ansprüche 1 bis 8, **dadurch gekennzeichnet, dass** das Dichtungsprofil (30) und die Zierleiste (50) in der Längsrichtung (x) gekrümmt sind.

10. Dichtung nach einem der Ansprüche 1 bis 9, **dadurch gekennzeichnet, dass** das Dichtungsprofil (30) aus einem thermoplastischen Elastomer oder Ethylen-Propylen-Dien-Kautschuk gefertigt, vorzugsweise extrudiert, ist.

11. Dichtung nach einem der Ansprüche 1 bis 10, **dadurch gekennzeichnet, dass** die Zierleiste (50) aus Kunststoff oder Metall, vorzugsweise Aluminium, gefertigt ist.

12. Dichtungsanordnung zum Abdichten von Fensterscheiben (16) eines Kraftfahrzeugs (10) mit
einer Dichtung nach einem der Ansprüche 1 bis 11 und
einem Flansch (19), der eine erste Befestigungsfläche (20) und eine zweite Befestigungsfläche (21), die der ersten Befestigungsfläche (20) abgewandt ist, aufweist;
wobei die erste Befestigungsfläche (20) und/oder die zweite Befestigungsfläche (21) mit einer Vielzahl an in der Längsrichtung (x) voneinander beabstandeten Aussparungen (22) versehen ist.

13. Dichtungsanordnung nach Anspruch 12, **dadurch gekennzeichnet, dass** die Rastabschnitte (40) in Aussparungen (22) entweder an der ersten Befestigungsfläche (20) oder an der zweiten Befestigungsfläche (21) eingedrückt sind.

14. Dichtungsanordnung nach Anspruch 12, **dadurch gekennzeichnet, dass** die Rastabschnitte (40) in Aussparungen (22) sowohl an der ersten Befestigungsfläche (20) als auch an der zweiten Befestigungsfläche (21) eingedrückt sind.

15. Dichtungsanordnung nach Anspruch 14, **dadurch gekennzeichnet, dass** die Aussparungen (22) an der ersten Befestigungsfläche (20) in der Längsrichtung versetzt zu den Aussparungen (22) an der zweiten Befestigungsfläche (21) angeordnet sind.

16. Dichtungsanordnung einem der Ansprüche 12 bis 15, **dadurch gekennzeichnet, dass** der Flansch (19) aus Metall, vorzugsweise Aluminium, besteht.

17. Dichtungsanordnung einem der Ansprüche 12 bis 16, **dadurch gekennzeichnet, dass** der Flansch (19) eine Dicke von wenigstens 1,5 mm, vorzugsweise wenigstens 3 mm, hat.

18. Dichtungsanordnung einem der Ansprüche 12 bis 17, **dadurch gekennzeichnet, dass** die Aussparungen (22) eine Tiefe von wenigstens 0,7 mm, vorzugsweise wenigstens 1,5 mm, haben.

19. Dichtungsanordnung einem der Ansprüche 12 bis 18, **dadurch gekennzeichnet, dass** sich der Flansch (19) aus einem ersten Rahmenteil (17) und einem zweiten Rahmenteil (18) zusammensetzt, die durch Laserschweißen miteinander verbunden sind.

## Claims

1. Seal for the sealing of window panes (16) of a motor vehicle (10) with
a sealing strip (30) made of an elastically deformable material and extending in a longitudinal direction (x);
wherein the sealing strip (30) comprises at least one sealing section (31, 33) and a fastening section (37);
wherein the fastening section (37) has a nearly U-shaped cross-section and can be secured on a flange (19) of the bodywork (11) of the motor vehicle (10);
wherein the fastening section (37) has a first limb (38), which can abut against a first fastening surface (20) of the flange (19), and a second limb (39), which can abut against a second fastening surface (21) of the flange (19), and
a trim strip (50) which is connected to the fastening section (37);
wherein the trim strip (50) comprises a first fastening arm (51), a second fastening arm (52), separated from the first fastening arm (51) by an intermediate space (54), and a base section (53) which connects the first fastening arm (51) and the second fastening arm (52) with each other;
wherein the fastening section (37) is located in the intermediate space (54) ;
wherein a plurality of locking sections (40) spaced at a distance from each other in the longitudinal direction (x) are cut out in the first limb (38) and/or the second limb (39) which can be pressed into corresponding slots (22) in the flange (19), and
wherein the first fastening arm (51) and/or the second fastening arm (52) is provided with at least one projection (55) by means of which the locking sections (40) are pushed into the slot (22) of the flange (19).

2. Seal according to Claim 1 **characterised by** locking sections (40) arranged equidistantly in a longitudinal direction (x).

3. Seal according to Claim 1 or Claim 2 **characterised in that** the fastening section (37), preferably the first fastening limb (38) and/or the second fastening limb (39), is free from any reinforcing support.

4. Seal according to one of the claims 1 to 3 **characterised in that** the projection (55) is formed by a thickening of the fastening arm (51, 52) or by a protrusion stamped out of the fastening arm (51, 52).

5. Seal according to Claim 4 **characterised by** a plurality of slots (55) spaced at a distance from each other in a longitudinal, direction (x) wherein each locking section (40) is assigned to one slot (55).

6. Seal according to one of the claims 1 to 5 **characterised by** a first sealing section (31) to seal a door (12, 13) against the bodywork (11) of a motor vehicle (10) and a second sealing section (33) to seal against a window pane (16) arranged in the door (12, 13).

7. Seal according to Claim 6 **characterised in that** the second sealing section (33) is combined with the trim strip (30).

8. Seal according to Claim 7 **characterised in that** the second sealing section (33) is provided with at least one recess (36) and the trim strip (50) has at least one projection (56, 57) which engages positively into the said recess (36).

9. Seal according to one of the claims 1 to 8 **characterised in that** the sealing strip (30) and the trim strip (50) are curved along their lengths (in direction x).

10. Seal according to one of the claims 1 to 9 **characterised in that** the sealing strip (30) is made of a thermoplastic elastomer or ethylene-propylene-diene-rubber and preferably by means of extrusion.

11. Seal according to one of the claims 1 to 10 **characterised in that** the trim strip (50) is made of plastic or metal, preferably aluminium.

12. Sealing arrangement for sealing a window pane (16) of a motor vehicle (10) with
a seal according to one of the claims 1 to 11 and
a flange (19) comprising a first fastening surface (20) and/or a second fastening surface (21) facing away from the first fastening surface (20);
wherein the first fastening surface (20) and/or the second fastening surface (21) is provided with a plurality of slots (22) spaced at a distance from each other in the longitudinal direction (x).

13. Seal according to Claim 12 **characterised in that** the locking sections (40) are pressed into slots (22) either on the first fastening surface (20) or the second fastening surface (21).

14. Seal according to Claim 12 **characterised in that** the locking sections (40) are pressed into slots (22) both on the first fastening surface (20) and on the second fastening surface (21).

15. Seal according to Claim 14 **characterised in that** the slots (22) on the first fastening surface (20) are arranged in the longitudinal direction (x) in an offset manner to the slots (22) on the second fastening surface (21).

16. Sealing arrangement according to one of the claims 12 to 15 **characterised in that** the flange (19) consists of metal, preferably aluminium.

17. Sealing arrangement according to one of the claims 12 to 16 **characterised in that** the flange (19) has a thickness of at least 1.5 mm, preferably at least 3 mm.

18. Sealing arrangement according to one of the claims 12 to 17 **characterised in that** the slots (22) have a depth of at least 0.7 mm, preferably of at least 1.5 mm.

19. Sealing arrangement according to one of the claims 12 to 18 **characterised in that** the flange (19) is made up of a first frame part (17) and a second frame part (18) which are connected by means of laser welding.

## Revendications

1. Joint pour étancher des vitres de fenêtre (16) d'un véhicule automobile (10), comprenant
un profilé de joint (30), qui est en un matériau élastiquement déformable et qui s'étend dans une direction longitudinale (x) ;
dans lequel le profilé de joint (30) comprend au moins un tronçon d'étanchéité (31, 33) et un tronçon de fixation (37) ;
dans lequel le tronçon de fixation (37) est conçu avec une section transversale approximativement en forme de U et peut être enfilé sur une bride (19) d'une carrosserie (11) du véhicule automobile (10) ;
dans lequel le tronçon de fixation (37) comprend une première branche (38) qui peut être appliquée contre une première surface de fixation (20) de la bride (19) et une seconde branche (39) qui peut être appliquée contre une seconde surface de fixation (21) de la bride (19), et
un enjoliveur (50) qui est relié au tronçon de fixation (37) ;
dans lequel l'enjoliveur (50) comprend une première nervure de fixation (51), une seconde nervure de fixation (52), qui est écartée de la première nervure de fixation (51) par un intervalle (54), et un tronçon de base (53), qui relie la première nervure de fixation (51) et la seconde nervure de fixation (52) l'une avec l'autre ;
dans lequel le tronçon de fixation (37) est agencé dans l'intervalle (54);
dans lequel une pluralité de tronçons d'enclenchement (40), écartés les uns des autres en direction longitudinale (x) sont séparés de la première branche (38) et/ou de la seconde branche (39), et peuvent être enfoncés dans des évidements associés (22) de la bride (19), et
dans lequel la première nervure de fixation (51) et/ou la seconde nervure de fixation (52) est pourvue d'au moins un talon (55) à travers lequel les tronçons d'enclenchement (40) sont enfoncés dans l'évidement (22) de la bride (19).

2. Joint selon la revendication 1, **caractérisé par** des tronçons d'enclenchement (40) agencés équidistants dans la direction longitudinale (x).

3. Joint selon la revendication 1 ou 2, **caractérisé en ce que** le tronçon de fixation (37), de préférence la première branche (38) et/ou la seconde branche (39), est dépourvu de support de renforcement.

4. Joint selon l'une des revendications 1 à 3, **caractérisé en ce que** le talon (55) est formé par un épaississement des nervures de fixation (51, 52), ou par une saillie estampée à partir des nervures de fixation (51, 52).

5. Joint selon la revendication 4, **caractérisé par** une pluralité de talons (55), écartés les uns des autres dans la direction longitudinale (x), de sorte qu'un talon (55) est associé à chaque tronçon d'enclenchement (40).

6. Joint selon l'une des revendications 1 à 5, **caractérisé par** un premier tronçon d'étanchéité (31) pour étancher une porte (12, 13) par rapport à la carrosserie (11) du véhicule automobile (10), et un second tronçon d'étanchéité (33) pour étancher une vitre de fenêtre (16) agencée dans la porte (12, 13).

7. Joint selon la revendication 6, **caractérisé en ce que** le second tronçon d'étanchéité (33) est relié à l'enjoliveur (50).

8. Joint selon la revendication 7, **caractérisé en ce que** le second tronçon d'étanchéité (33) est pourvu d'au moins une échancrure (36), et l'enjoliveur (50) comporte au moins une saillie (56, 57) qui s'engage en coopération de formes dans l'échancrure (36).

9. Joint selon l'une des revendications 1 à 8, **caractérisé en ce que** le profilé de joint (30) et l'enjoliveur (50) sont incurvés dans la direction longitudinale (x).

10. Joint selon l'une des revendications 1 à 9, **caractérisé en ce que** le profilé de joint (30) est fabriqué en un élastomère thermoplastique ou en un caoutchouc éthylène-propylène-diène, de préférence par extrusion.

11. Joint selon l'une des revendications 1 à 10, **caractérisé en ce que** l'enjoliveur (50) est fabriqué en matière plastique ou en métal, de préférence en aluminium.

12. Agencement d'étanchéité pour étancher des vitres de fenêtre (16) d'un véhicule automobile (10), comprenant
un joint selon l'une des revendications 1 à 11, et
une bride (19) qui comporte une première surface de fixation (20), et une seconde surface de fixation (21) qui est détournée de la première surface de fixation (20) ;
dans lequel la première surface de fixation (20) et/ou la seconde surface de fixation (21) est pourvue d'une pluralité d'échancrures (22) écartées les unes des autres en direction longitudinale (x).

13. Agencement d'étanchéité selon la revendication 12, **caractérisé en ce que** les tronçons d'enclenchement (40) sont enfoncés dans des échancrures (22) soit au niveau de la première surface de fixation (20) soit au niveau de la seconde surface de fixation (21).

14. Agencement d'étanchéité selon la revendication 12, **caractérisé en ce que** les tronçons d'enclenchement (40) sont enfoncés dans des échancrures (22) aussi bien au niveau de la première surface de fixation (20) qu'au niveau de la seconde surface de fixation (21).

15. Agencement d'étanchéité selon la revendication 14, **caractérisé en ce que** les échancrures (22) au niveau de la première surface de fixation (20) sont agencées en décalage en direction longitudinale par rapport aux échancrures (22) au niveau de la seconde surface de fixation (21).

16. Agencement d'étanchéité selon l'une des revendications 12 à 15, **caractérisé en ce que** la bride (19) et en métal, de préférence en aluminium.

17. Agencement d'étanchéité selon l'une des revendications 12 à 16, **caractérisé en ce que** la bride (19) a une épaisseur d'au moins 1,5 mm, de préférence d'au moins 3 mm.

18. Agencement d'étanchéité selon l'une des revendications 12 à 17, **caractérisé en ce que** les échancrures (22) ont une profondeur d'au moins 0,7 mm, de préférence d'au moins 1,5 mm.

19. Agencement d'étanchéité selon l'une des revendications 12 à 18, **caractérisé en ce que** la bride (19) se compose d'une première partie de cadre (17) et d'une seconde partie de cadre (18), qui sont reliées l'une à l'autre par soudage au laser.
